# EUROPEAN PATENT SPECIFICATION

(11) **EP 4 364 842 B1**
(45) Date of publication and mention of the grant of the patent: **08.07.2026**
(21) Application number: 22205194.8
(22) Date of filing: 03.11.2022
(51) Int. Cl.: B01J 23/755, B01J 23/78, B01J 23/83, B01J 23/94, B01J 37/02, B01J 38/12, C01B 3/00

(54) **FIXED BED GLYCEROL STEAM REFORMING CATALYST, USE OF SAID CATALYST AND METHOD FOR PREPARING SAID CATALYST**
FESTBETTKATALYSATOR FÜR DIE REFORMIERUNG VON GLYCERINDAMPF, VERWENDUNG DIESES KATALYSATORS UND VERFAHREN ZUR HERSTELLUNG DIESES KATALYSATORS
CATALYSEUR DE REFORMAGE À LA VAPEUR DE GLYCÉROL À LIT FIXE, UTILISATION DUDIT CATALYSEUR ET PROCÉDÉ DE PRÉPARATION DUDIT CATALYSEUR

(43) Date of publication of application: 08.05.2024
(73) Proprietor: C&CS Catalysts and Chemical Specialties GmbH, 85551 Kirchheim bei München (DE); Consejo Superior de Investigaciones Cientificas, 28006 Madrid (ES)
(72) Inventor: NACKEN, Manfred, 85604 Zorneding (DE); GRASA ADIEGO, Gemma Susanna, 28006 Madrid (ES)
(74) Representative: Prinz & Partner mbB

(56) References cited:
- EP-A1- 3 805 149
- M.L. DIEUZEIDE ET AL: "Steam reforming of glycerol over Ni/Mg/γ-Al2O3 catalysts. Effect of calcination temperatures", INTERNATIONAL JOURNAL OF HYDROGEN ENERGY, vol. 37, no. 19, 10 January 2012 (2012-01-10), AMSTERDAM, NL, pages 14926 - 14930, XP055437041, ISSN: 0360-3199, DOI: 10.1016/j.ijhydene.2011.12.086
- BOBADILLA L F ET AL: "Promoting effect of Sn on supported Ni catalyst during steam reforming of glycerol", INTERNATIONAL JOURNAL OF HYDROGEN ENERGY, ELSEVIER, AMSTERDAM, NL, vol. 41, no. 22, 10 May 2016 (2016-05-10), pages 9234 - 9244, XP029557690, ISSN: 0360-3199, DOI: 10.1016/J.IJHYDENE.2016.04.119
- IRIONDO A ET AL: "Hydrogen Production from Glycerol Over Nickel Catalysts Supported on Al2O3 Modified by Mg, Zr, Ce or La", TOPICS IN CATALYSIS, KLUWER ACADEMIC PUBLISHERS-PLENUM PUBLISHERS, NE, vol. 49, no. 1-2, 23 April 2008 (2008-04-23), pages 46 - 58, XP019616058, ISSN: 1572-9028

## Description

### TECHNICAL FIELD OF THE INVENTION

The invention is directed to a fixed bed glycerol steam reforming catalyst, the use of said catalyst in a steam reforming process and a method for preparing a fixed bed glycerol steam reforming catalyst.

### BACKGROUND OF THE INVENTION

For hydrogen production starting from glycerol (C₃H₈O₃) as feedstock, catalytic steam reforming of glycerol in the gas phase according to reaction scheme (I) is the most effective reaction pathway.

| | | |
|---|---|---|
| (I) | C₃H₈O₃ + 3 H₂O → 3 CO₂ + 7 H₂ | ΔH = + 128 kJ/mol |

Steam reforming of glycerol has attracted special interest, because glycerol is formed as byproduct with a content of approximately 10 wt.% in the industrial biodiesel production based on the methyl esterification process of vegetable oils and animal fats and can be used as feedstock for hydrogen production according to reaction scheme (I) described above.

However, because of the high endothermicity of this reaction, with respect to a more energy efficient production, there is a need for a nickel-based glycerol steam reforming catalyst to combine the endothermic catalytic steam reforming of glycerol with the exothermic oxidation of the reduced nickel catalyst in a cyclic chemical looping operation mode of a reactor.

In the article of S. Adhikari et al: "Conversion of Glycerol to Hydrogen via a Steam Reforming Process over Nickel Catalysts" (Energy & Fuels, 22 (2), 2008, pp. 1220 - 1226), CeO₂ and MgO supported nickel catalysts are described to be active in steam reforming of glycerol at an operating temperature between 550 to 650 °C.

However, these supported nickel catalysts are not stable at high temperatures of about 900 °C, which are necessary for use in multicycle operating conditions which include the sequence of a reduction step, a glycerol steam reforming step and an oxidation step. Specifically, the high temperatures are necessary in the oxidation step to allow energy generation for the endothermic glycerol steam reforming reaction by the exothermic oxidation of metallic nickel to nickel oxide with respect to an energy efficient chemical looping process.

With other words, in the desired multicycle process, the chemical looping starts with a reduction step of the nickel catalyst using an off-gas from another process reactor or a gas containing H₂, followed by the catalytic steam reforming step of glycerol and a subsequent oxidation step of the reduced nickel catalyst using air to generate heat for the endothermic steam reforming step of the next cycle.

Typical nickel-based commercial steam reforming catalysts based on calcium or magnesium aluminate carriers with a target operating temperature range between 750 to 850 °C have been developed for steam reforming of saturated hydrocarbon compounds such as natural gas, liquefied petroleum gas (LPG) or naphtha feed streams, respectively, but not for oxygenated compounds such as glycerol.

According to the review of P. D. Vaidya and A. E. Rodrigues: "Glycerol Reforming for Hydrogen Production: A Review (Chem. Eng. Technol. 32 (10), 2009, pp. 1463 - 1469) it is known that steam reforming of glycerol can lead to carbon deposition, because methane can be formed as side product. Methane cannot be effectively converted by reforming in the presence of H₂O and CO₂ due to the relatively low surface area of commercial steam reforming catalysts being by at least 2.5 to 3.5 fold lower compared to the above-mentioned CeO₂ and MgO supported catalysts.

EP 3 805 149 A1 describes a fluidizable steam reforming catalyst comprising a support material loaded with a catalytically active material, wherein the support material is a particle mixture of a basic mixed metal oxide having a grain size distribution in the range of from 0.05 to 0.3 mm. The catalytically active material is an oxide of nickel and the catalyst has a specific surface area of at least 20 m²/g or more.

M.L. Dieuzeide et al: "Steam reforming of glycerol over Ni/Mg/γ-Al2O3 catalysts. Effect of calcination temperatures" (INTERNATIONAL JOURNAL OF HYDROGEN ENERGY , Vol. 37 (39), 10 January 2012, pp. 14926-14930, doi: 10.1016/j.ijhydene.2011.12.086) discloses nickel-based catalysts supported over γ-Al₂O₃ modified with 3% Mg for steam reforming of glycerol. The support is prepared by an incipient wetness impregnation method.

From Bobadilla L F et al: "Promoting effect of Sn on supported Ni catalyst during steam reforming of glycerol" (INTERNATIONAL JOURNAL OF HYDROGEN ENERGY, Vol. 41 (22), 10 May 2016, pp. 9234-9244, doi: 10.1016/J.IJHYDENE.2016.04.119), a Sn-doped catalyst for steam reforming of glycerol is known. The catalyst is prepared by impregnating an alumina support with a cerium, magnesium, tin and nickel precursor, subsequent drying and calcination at 700 °C for 12h in air. The catalyst consists of 17 wt.% Ni, 3 wt.% Sn, 12 wt.% CeO₂, 8 wt.% MgO and 60 wt. Al₂O₃.

Iriondo et al: "Hydrogen Production from Glycerol Over Nickel Catalysts Supported on Al2O3 modified by Mg, Zr, Ce or La" (TOPICS IN CATALYSIS, Vol. 49 (1-2), 23 April 2008, pp. 46-58) describes a catalyst for hydrogen production from glycerol having a MₓO_{y}-Al₂O₃ support with M being chosen from Zr, Ce, La or Mg. On the support, a nickel catalyst is deposited by impregnation with a precursor solution and subsequent calcination at 500 °C.

Moreover, typical commercial steam reforming catalysts are designed for long-term steam reforming in an optimum temperature window and not for alternating reduction, glycerol steam reforming and oxidation steps in multicycle operating conditions.

Hence, there is a need for a nickel-based glycerol steam reforming catalyst that exhibits a high catalytic performance in multicycling glycerol steam reforming and shows a high redox stability as well as a high thermal stability under multicycle operating conditions.

### SUMMARY OF THE INVENTION

Therefore, it is an object of the invention to provide a suitable nickel-based catalyst for glycerol steam reforming to fulfill the above requirements and which can be used in a multicycling chemical looping process.

The object of the invention is solved by a fixed bed glycerol steam reforming of claim 1, the use of a catalyst according to claim 8 and a method for preparing a fixed bed glycerol steam reforming catalyst according to claim 12.

The catalyst according to the invention comprises a support material loaded with a catalytically active material. The support material is a particle mixture of a basic mixed metal oxide consisting of MgO-Al₂O₃ or MgO-Al₂O₃-CeO₂, and the catalytically active material is an oxide of nickel. The catalyst has a specific surface area of 45 m²/g or more after calcination for 5 hours in ambient air at a temperature of 950 °C.

It has been found that support materials based on basic mixed metal oxides consisting of MgO-Al₂O₃ or MgO-Al₂O₃-CeO₂ can be used to obtain a catalyst which exhibits very high specific surface areas of 45 m²/g or more after calcination at a temperature of 950 °C. In this way, a high catalytic activity can be maintained even after exposure to high operating temperature, and even after a high number of multicycle operations including at least one step at high operating temperatures.

The specific surface area can be measured by the N₂-BET method according to DIN ISO 9277.

The term "basic" in respect to the mixed metal oxide defines the reaction behavior with acids and bases of the mixed metal oxide. A basic mixed metal oxide will react with acids but not with bases. In other words, the term "basic mixed metal oxide" denotes a mixed metal oxide with basic properties.

The catalyst according to the invention is intended to be used in fixed bed reactors. This facilitates catalytic steam reforming of glycerol on an industrial scale, where fixed bed reactors are used to minimize the pressure drop of a catalytic reactor filling.

The basic mixed metal oxide support further prevents coke formation during steam reforming. This effect is based on the high electron density on the surface of the support due to the presence of basic mixed metal oxide groups on the surface. This prevents formation and/or adsorption of unsaturated and/or aromatic graphite-like carbon structures, which also exhibit high electron densities, on the surface of the support due to electronic repulsion forces.

Moreover, the basic mixed metal support shows sufficient mechanical stability during reforming as well as in oxidation cycles at higher temperatures of 850 to 900 °C. Therefore, the inventive catalyst can be used in multicycling steam reforming, including several reduction, steam reforming and oxidation steps. This further reduces the costs in industrial scale production of hydrogen.

The combination of at least two metal oxides having different sintering temperatures can prevent a strong reduction of the specific surface area of the metal oxides during high temperature treatment, which would occur if only one type of metal oxide would be used.

In another variant, the basic mixed metal oxide comprises 50 to 60 wt.% of MgO, from 37 to 45 wt.% of Al₂O₃, and from 3 to 6 wt.% of CeO₂, based on the total weight of the basic mixed metal oxide, respectively.

In still another variant, the basic mixed metal oxide comprises 40 to 60 wt.% of MgO, and from 40 to 60 wt.% of Al₂O₃, based on the total weight of the basic mixed metal oxide, respectively.

The ratio of MgO/Al₂O₃ and MgO/Al₂O₃/CeO₂ can be chosen according to the desired stability and basicity of the support material, wherein higher amounts of MgO increase the basic properties of the support material.

Preferably, the catalytically active material is deposited in the form of particles on the support material, wherein the particles have a primary particle size between 10 and 50 nm as measured by high-resolution scanning electron microscopy (SEM).

Accordingly, the catalytically active material, preferably NiO, is dispersed on the large surface area provided by the support material and can be accessed by the reaction gases. Smaller particles may not show sufficient multicycle stability while larger particles could show less catalytic activity and could reduce the specific surface area of the catalyst.

To further ensure a sufficient high specific surface area of the catalyst even after prolonged exposure to high temperatures, the support material has a specific surface area of 120 m²/g or more after calcination for 2 hours in ambient air at a temperature of 750 °C.

Especially, the support material has a specific surface area in the range of from 120 m²/g to 160 m²/g after calcination for 2 hours in ambient air at a temperature of 750 °C.

The catalyst itself especially can have a specific surface area of 70 m²/g or more after calcination for 2 hours in ambient air at a temperature of 750 °C, especially in the range of from 70 to 130 m²/g.

According to the invention, the catalyst has a specific surface area of 45 m²/g or more after calcination for 5 hours in ambient air at a temperature of 950 °C. With other words, even when being exposed for extended time periods to temperatures which exceed the temperatures typically encountered in the oxidation step of the catalytically active material, the catalyst still exhibits a high specific surface area, thereby ensuring sufficient catalytic activity of the catalyst.

Especially, the catalyst has a specific surface area in the range of from 45 m²/g to 60 m²/g after calcination for 5 hours in ambient air at a temperature of 950 °C, e.g. from 47 to 60 m²/g.

The catalyst can comprise a loading with the catalytically active material of from 5 to 50 wt.%, related to the total mass of the basic mixed metal oxide, especially of from 10 to 40 wt.%.

As nickel and its oxides are expensive, lower amounts of the catalytically active material reduces the production costs while higher amounts increase the activity of the catalyst. However, the high specific surface area of the support material of the inventive catalysts allows to use lower amounts of catalytically active material, too, while maintaining sufficiently high catalytic activity.

Preferably, the catalytically active material is nickel oxide (NiO).

While the term "catalytically active material" refers to the as-prepared catalyst, it is well understood by the person skilled in the art that the catalytically active material is activated by a chemical reaction in a reduction step forming catalytically active species on the catalyst.

The catalyst has a tablet-like form.

E.g., the catalyst can have a generally cylindrical tablet shape with a diameter in the range of from 2 to 8 mm, preferably of from 4 to 6 mm, and a height of from 2 to 8 mm, preferably of from 4 to 6 mm.

Further, the catalyst can have an apparent density of from 0.5 to 0.8 kg/L. In this range, sufficiently high thermal and chemical stability of the catalyst is provided while maintaining a sufficiently high specific surface area under operating temperatures of the catalyst.

To ensure a sufficiently high mechanical stability of the catalyst, the catalyst especially exhibits a side crush strength in the range of from 15 to 100 N.

Side crush strength can be measured according to ASTM D4179.

The object of the invention is further solved by the use of the catalyst as described above in a steam reforming process chosen from glycerol steam reforming and combined glycerol steam and dry reforming.

By using the fixed bed glycerol steam reforming catalyst according to the invention, high conversion yields in catalytic glycerol steam reforming and combined glycerol steam and dry reforming can be achieved.

It has also been found that the content of methane as side product can be minimized by the use of catalyst as described before up to the equilibrium yield of 0.04 %. With other words, the amount of methane as undesired side product can be reduced to the theoretical minimum amount.

The steam reforming process has an operating temperature of from 700 to 900 °C to optimize the conversion yield and the conversion rate of glycerol. At these operating temperatures, the catalyst according to the invention maintains its high specific surface, thereby also maintaining high conversion yields.

Preferably, the steam reforming process is a multicycling steam reforming and oxidation process. In this way, a more energy efficient production of hydrogen can be achieved, as the heat generated in a preceding cycle can be used in the subsequent cycle.

Additionally, the reduction of the catalyst before steam reforming can be performed by using H₂ containing off-gas from another reactor, e.g. from a Fischer-Tropsch process.

Specifically, a single cycle of the multicycle steam reforming and regeneration process can comprise the following steps: a) a reduction step, b) a glycerol steam reforming step or a glycerol steam and dry reforming step at a temperature in the range of from 700 to 900 °C, and c) an oxidation step at a temperature of up to 900 °C.

The multicycle steam reforming process comprises a series of single cycles comprising the sequence of steps a) to c). Therefore, heat generated in the oxidation step c) can be used in the endothermic step b) of the subsequent cycle, resulting in a higher energy efficiency of the steam reforming process, especially by using for reduction H₂ containing off-gas from another exothermic heat generating process.

The skilled person will appreciate that the total number of single cycles can be adapted based on e.g. the necessary conversion rates, the total duration of a single cycle, the duration of each of the steps a) to c) and/or the operating temperature.

In a variant, a single cycle of the multicycling steam reforming process has a total duration of from 9 to 50 min.

Generally, the total duration of a single cycle will be given by the sum of the individual durations of steps a), b) and c). The material oxidation and reduction kinetics of these steps influence the individual duration of the process steps. Most importantly, the energy balance from the oxidation step and the reduction/reforming steps will determine the total duration of a single cycle, as the endothermic reforming step b) will be driven by the energy provided from the oxidation step c).

The total duration of a single cycle is especially chosen according to the loading of the catalytically active material, wherein a higher loading allows to reduce the total duration of the single cycle. With other words, in addition to the energy balance discussed above, the loading of the catalytically active material can be used to set the total duration of a single cycle.

The object of the invention is further solved by a method for preparing a fixed bed glycerol steam reforming catalyst as described before comprising the following steps:
a) Impregnating a support material precursor with a basic mixed metal oxide modifier suspension to form a precursor mixture,
   wherein the support material precursor consists of magnesium aluminium hydroxy carbonate and/or magnesium aluminium hydroxyl carbonate modified with Al(NO₃)₃ x 9 H₂O, and
   wherein the basic mixed metal oxide modifier suspension comprises pseudo boehmite, Mg(NO₃)₂ x 6 H₂O, and optionally Ce(NO₃)₃ x 6 H₂O
b) Forming a support material intermediate by drying and pressing the precursor mixture, wherein pressing of the precursor mixture is done by means of a tablet pressing machine,
c) Calcining the dried and pressed precursor mixture at a first calcination temperature in the range of from 750 to 900 °C to form a support material,
d) Impregnating the support material with a solution comprising a nickel-based catalyst precursor,
e) Calcining the impregnated support material at a second calcination temperature to form the fixed bed glycerol steam reforming catalyst, wherein at the second calcination temperature an oxide of nickel is formed as catalytically active material from the nickel-based catalyst precursor.

The method according to the invention is based on the idea to modify a suitable support material precursor by a basic mixed metal oxide modifier suspension. This modification enables to obtain a support material which has a higher specific surface area compared to a support material which has been prepared without the addition of the basic mixed metal oxide modifier suspension.

In this respect, it is an important feature of the method according to the invention that the modification of the support material precursor is done with a basic mixed metal oxide modifier suspension, as a basic catalyst support material is needed for the intended use as fixed bed steam reforming catalyst. If no basic mixed metal oxide modifier suspension would be used, the resulting support material would have an increased acidity which can cause carbon deposition in the catalytic steam reforming reaction of glycerol.

The second calcination temperature preferably is in the range of from 750 to 900 °C.

Further, the impregnated support material is preferably calcined in step e) at a second calcination temperature of from 750 to 900 °C for at least 2 h up to 5 h in ambient air.

Solvents for preparing the basic mixed metal oxide modifier suspension and/or the solution comprising the nickel-based catalyst precursor are preferably chosen from a low-chain alcohol. Thus, impregnation steps of the method according to the invention preferably include the use of a low-chain alcohol. The use of a low-chain alcohol prevents or at least reduces the extent of unwanted reactions between the support material and the solvent as well as between the nickel oxide precursor and the solvent.

The term "low-chain alcohol" defines an alcohol with up to three carbon atoms.

The support material precursor consists of magnesium aluminium hydroxy carbonate and/or magnesium aluminium hydroxyl carbonate modified with Al(NO₃)₃ x 9 H₂O.

The basic mixed metal oxide modifier suspension comprises pseudo boehmite, Mg(NO₃)₂ x 6 H₂O and optionally Ce(NO₃)₃ x 6 H₂O.

Without wishing to be bound by theory, it is contemplated that the addition of Ce(NO₃)₃ x 6 H₂O to the basic mixed metal oxide precursor, and CeO₂ formed from this compound during calcination, interrupts or at least restricts further sintering processes of the support material precursor, thereby contributing to the high specific surface area even after calcination at high temperatures.

After forming the precursor mixture, an additional organic additive can be added as processing aid before drying.

In one embodiment, the organic additive is polyvinylalcohol. Polyvinylalcohol has a high binding capacity to metal oxide surfaces and therefore is especially suitable as processing aid.

The organic additive can be added in an amount of 0.5 to 1.5 wt.%, based on the total weight of precursor mixture.

To facilitate the addition of the organic additive, the organic additive preferably is used in powder form.

Pressing of the precursor mixture is done by means of a tablet pressing machine, allowing to precisely control the shape and size of the obtained pressed catalyst.

Preferably, the precursor mixture is manufactured in a first step to a grain size fraction of between 20 and 300 µm which is then further processed in a second step by the tablet pressing machine.

The term "grain size fraction" defines a fraction of the total amount of solid particles having a certain grain size and/or grain size distribution.

The dried and pressed precursor mixture, preferably being present in tablet-like shape, is then calcined at the first calcination temperature.

According to the invention, the first calcination temperature is at least 750 °C to ensure a complete conversion and sufficient densification of the precursor mixture during the formation of the support material, while the first calcination temperature does not exceed 900 °C to retain a sufficiently high specific surface area of the support material to allow for a high dispersion of the later added catalytically active material.

The support material is then impregnated by the catalyst solution by an incipient wetness technique.

In one embodiment, between steps d) and e), at least one intermediate calcination step d1) followed by an additional impregnation step d2) with a catalyst solution comprising a nickel-based catalyst precursor can be done. This allows to increase the loading of the catalytically active material in the fixed bed glycerol steam reforming catalyst obtained in step e).

The intermediate calcination step is done at a temperature to allow complete decomposition of the nickel-based catalyst precursor in the catalyst solution, preferably at a temperature of 600 to 700 °C, and especially for at least 2 h in ambient air. The intermediate calcination step allows to open the pore structure of the impregnated support material after the first impregnation step (or subsequent impregnation steps) such that the catalyst solution used in a subsequent impregnation step can enter the pores.

Thus, in this embodiment, the method for preparing a fixed bed glycerol steam reforming catalyst comprises the following steps:
a) Impregnating a support material precursor with a basic mixed metal oxide modifier suspension to form a precursor mixture,
b) Forming a support material intermediate by drying and pressing the precursor mixture,
c) Calcining the dried and pressed precursor mixture at a first calcination temperature in the range of from 750 to 900 °C to form a support material,
d) Impregnating the support material with a catalyst solution comprising a nickel-based catalyst precursor,
d1) Calcining the impregnated support material at an intermediate calcination temperature to form an intermediate fixed bed glycerol steam reforming catalyst, wherein at the intermediate calcination temperature an oxide of nickel is formed as catalytically active material from the nickel-based catalyst precursor,
d2) Impregnating the intermediate fixed bed glycerol steam reforming catalyst with the catalyst solution comprising a nickel-based catalyst precursor to form an impregnated support material, and
e) Calcining the impregnated support material fixed bed glycerol steam reforming catalyst at a second calcination temperature to form the fixed bed glycerol steam reforming catalyst, wherein at the second calcination temperature an oxide of nickel is formed as catalytically active material from the nickel-based catalyst precursor.

Thus, the term "impregnated support material" also denotes a support material which has been formed by impregnating an intermediate fixed bed glycerol steam reforming catalyst.

Steps d1) and d2) can be repeated one or several times to allow for a target loading of the catalytically active material in the fixed bed glycerol steam reforming catalyst obtained after step e).

The catalyst solution used in steps d) and d2) can have the same or different compositions. If steps d1) and d2) are repeated, the catalyst solutions used in subsequent steps d2) can have the same or different compositions.

The above described fixed bed glycerol steam reforming catalyst according to the invention is especially obtained by the above described method according to the invention.

### DETAILED DESCRIPTION OF PREFERRED EMBODIMENTS

Further advantages and properties of the invention become evident by the following description of preferred embodiments and the non-limiting examples provided therein.

### Manufacture of the Support Material

Magnesium aluminium hydroxycarbonate or magnesium aluminium hydroxycarbonate modified with Al(NO₃)₃ x 9 H₂O as support material precursor was provided in powder form and impregnated with a basic mixed metal oxide modifier suspension to form a precursor mixture.

The used basic mixed metal oxide modifier suspension comprised the components listed in Table 1, wherein the amount of the support material precursor and of the components of the basic mixed metal oxide modifier suspension were chosen such that after pressing and calcining the precursor mixture at a first calcination temperature of 750 °C for 2 hours in ambient air and forming the support material, the mass ratios also given in Table 1 were obtained.

Also, a comparative example was prepared according to the same procedure, with the only difference being that no modifier suspension and no modification with Al(NO₃)₃ x 9 H₂O was used.

The specific surface area was measured by the N₂-BET method according to DIN ISO 9277.

The support materials were then pressed by a tablet-pressing machine into cylindrically shaped tablets having a diameter and a height of about 4 mm, followed by an additional calcination step at a temperature of 750 °C in ambient air until an apparent density in the range of from 0.55 to 0.65 kg/L was reached.

As becomes evident from the experimental results, the use of the additional modifier suspension results in an increase in the specific surface area by up to 31 %.

In the following, the preparation method for manufacturing the Examples 1 to 5 presented in Table 1 will be described in more detail.

### Example 1 (comparative)

100 g magnesium aluminium hydroxycarbonate in powder form was provided, with ≥ 90 % of the powder particle size being below 90 µm.

The powder was calcined at 750°C for 2 h without addition of any additives.

The specific surface of the obtained MgO-Al₂O₃ powder with a composition of 70 wt.% MgO and 30 wt.% Al₂O₃ shows a value of 118 m²/g as measured by the N₂-BET method.

### Example 2

22.7 g of magnesium nitrate hexahydrate (Mg(NO₃)₂ x 6 H₂O) was dissolved in 50.2 g of a low-chain alcohol at 50°C.

The solution was added to 24.1 g pseudo boehmite with an Al₂O₃ content of 75 wt.% in a beaker. After vigorous stirring, the resulting suspension was added to 100 g of magnesium aluminium hydroxycarbonate in powder form with ≥ 90 % of the powder particle size being below 90 µm. After homogenization, the impregnated powder was completely dried under the hood.

After addition of 1.47 g polyvinyl alcohol in powder form to 138.8 g of the dried impregnated magnesium aluminium hydroxycarbonate, homogenization was performed to obtain the MgO-Al₂O₃ precursor powder of a grain size fraction in the range of from 20 to 300 µm for pressing of tablets.

After calcination of the pressed tablets for 2 h at a first calcination temperature of 750 °C, 79.6 g MgO-Al₂O₃ tablets with a MgO content of 55.5 wt.% MgO and an Al₂O₃ content of 44.5 wt.% Al₂O₃ were obtained.

By this procedure, the mass ratio after calcination of MgO of magnesium aluminium hydroxycarbonate to Al₂O₃ of magnesium aluminium hydroxycarbonate to MgO of magnesium nitrate hexahydrate as well as to Al₂O₃ of pseudo boehmite was adjusted to 1 : 0.4286 : 0.0878 : 0.4448.

The calcined MgO-Al₂O₃ tablets exhibited a specific surface area of 154 m²/g as measured by the N₂-BET method.

### Example 3

In analogy to the procedure described above for Example 2, 81.47 g of magnesium nitrate hexahydrate (Mg(NO₃)₂ x 6 H₂O) was dissolved in 185.6 g of a low-chain alcohol at 48°C.

64.6 g pseudo boehmite was then added to the magnesium nitrate solution. After vigorous stirring, the resulting suspension was added to 100.7 g of magnesium aluminium hydroxycarbonate.

After homogenization and drying of the impregnated powder, 2.32 g polyvinyl alcohol was added to 217.6 g of the dried impregnated magnesium aluminium hydroxycarbonate followed by homogenization to obtain the MgO-Al₂O₃ precursor powder of a grain size fraction in the range of from 20 to 300 µm for pressing of tablets.

After calcination for 2 h at a first calcination temperature of 750 °C, 119.68 g MgO-Al₂O₃ tablets with a MgO content of 44.86 wt.% MgO and an Al₂O₃ content of wt. 55.14 % Al₂O₃ were obtained.

By this procedure, the ratio of the mass of MgO of magnesium aluminium hydroxycarbonate to the mass of Al₂O₃ of magnesium aluminium hydroxycarbonate to the mass of MgO of magnesium nitrate hexahydrate as well as to the mass of Al₂O₃ after calcination of pseudo boehmite was adjusted to the ratio 1 : 0.4286 : 0.3133 : 1.1857.

The calcined MgO-Al₂O₃ tablets exhibited a specific surface area of 125 m²/g measured by N₂-BET method.

### Example 4

17.2 g aluminium nitrate nonahydrate (Al(NO₃)₃ x 9 H₂O) was dissolved in 28.4 g of a low-chain alcohol at 48 °C.

The aluminium nitrate nonahydrate solution was then added to 46.8 g magnesium aluminium hydroxycarbonate followed by homogenization and complete drying.

In analogy to the procedure described above for Example 2, in a separate beaker 7.6 g magnesium nitrate hexahydrate was dissolved in 14.6 g of a low-chain alcohol at 48 °C.

8 g pseudo boehmite was then added to the magnesium nitrate solution. After vigorous stirring, the resulting suspension was added to 64 g of the dried aluminium nitrate nonahydrate impregnated magnesium aluminium hydroxy carbonate.

After homogenization and drying of the impregnated powder, 0.853 g polyvinyl alcohol was added to 79.6 g of the dried impregnated magnesium aluminium hydroxycarbonate followed by homogenization to obtain the MgO-Al₂O₃ precursor powder of a grain size fraction in the range of from 20 to 300 µm for pressing of tablets.

After calcination for 2 h at a first calcination temperature of 750 °C, 36.7 g MgO-Al₂O₃ tablets with a MgO content of 55.1 wt.% MgO and an Al₂O₃ content of 44.9 wt.% Al₂O₃ were obtained.

By this procedure, the mass ratio after calcination of MgO of magnesium aluminium hydroxycarbonate to Al₂O₃ of magnesium aluminium hydroxycarbonate to Al₂O₃ of aluminium nitrate nonahydrate to MgO of magnesium nitrate hexahydrate as well as to Al₂O₃ of pseudo boehmite was adjusted to 1 : 0.4286 : 0.1232 : 0.0626 : 0.3150.

The calcined MgO-Al₂O₃ tablets exhibited a specific surface area of 134 m²/g as measured by the N₂-BET method.

### Example 5

In analogy to the procedure described above for Example 2, 11.9 g magnesium nitrate hexahydrate (Mg(NO₃)₂ x 6 H₂O) was dissolved in 22.4 g of a low-chain alcohol at 48 °C.

16.9 g pseudo boehmite was then added to the magnesium nitrate solution. After vigorous stirring, the resulting suspension was added to 70 g of magnesium aluminium hydroxycarbonate. After homogenization, the material was completely dried under the hood.

In a subsequent step, 6.75 g Cerium (III) nitrate hexahydrate Ce(NO₃)₃ x 6 H₂O was dissolved in 19.5 g of a low-chain alcohol at 48 °C.

The solution was added to the dried magnesium nitrate hexahydrate and pseudoboehmite impregnated magnesium aluminium hydroxycarbonate.

After homogenization and complete drying under the hood, 1.03 g polyvinyl alcohol was added to press tablets from this MgO-Al₂O₃-CeO₂ precursor powder of a grain size fraction in the range of from 20 to 300 µm.

After calcination of the tablets for 2 h at a first calcination temperature of 750°C, by this procedure, the mass ratio of MgO of magnesium aluminium hydroxycarbonate to Al₂O₃ of magnesium aluminium hydroxycarbonate to MgO of magnesium nitrate hexahydrate to Al₂O₃ of pseudo boehmite as well as to CeO₂ from Cerium (III) nitrate hexahydrate was adjusted to 1 : 0.4286 : 0.0658: 0.4460 : 0.0941.

The corresponding tablets contained 4.6 wt.% CeO₂, 52.4 wt.% MgO and 43 wt.% Al₂O₃.

The tablets exhibited a specific surface area of 121 m²/g as measured by the N₂-BET method.

**Table 1: Experimental Results for manufacturing the support material**

| Example | Support material precursor | Components of modifier solution | Mass ratio in support material* | Specific surface area in m²/g# | Composition of support material |
|---|---|---|---|---|---|
| 1 (comparative) | magnesium | - | MgO (support material precursor): Al₂O₃ (support material precursor) : MgO (Mg(NO₃)₂ x 6 H₂O) : Al₂O₃ (pseudo boehmite) = 1:0.43:0:0 | 118 | MgO: 70.0 wt.% |
| | aluminium | | | | Al₂O₃: 30.0 wt.% |
| | hydroxycarbonate | | | | |
| 2 | magnesium | Mg(NO₃)₂ x 6 H₂O, | MgO (support material precursor): Al₂O₃ (support material precursor) : MgO (Mg(NO₃)₂ x 6 H₂O) : Al₂O₃ (pseudo boehmite) = 1:0.43:0.09:0.45 | 154 | MgO: 55.5 wt.% |
| | aluminium | | | | Al₂O₃: 44.5 wt.% |
| | hydroxycarbonate | Pseudo boehmite | | | |
| 3 | magnesium | Mg(NO₃)₂ x 6 H₂O, | MgO (support material precursor): Al₂O₃ (support material precursor) : MgO (Mg(NO₃)₂ x 6 H₂O) : Al₂O₃ (pseudo boehmite) = 1:0.43:0.31:1.19 | 125 | MgO: 44.9 wt.% |
| | aluminium | | | | Al₂O₃: 55.1 wt.% |
| | hydroxycarbonate | Pseudo boehmite | | | |
| 4 | magnesium | Mg(NO₃)₂ x 6 H₂O, | MgO (support material precursor): Al₂O₃ (support material precursor) : Al₂O₃ (Al(NO₃)₃ x 9 H₂O) : MgO (Mg(NO₃)₂ x 6 H₂O) :: Al₂O₃ (pseudo boehmite) = 1:0.43:0.12:0.06:0.32 | 134 | MgO: 55.1 wt.% |
| | aluminium | | | | Al₂O₃: 44.9 wt.% |
| | hydroxycarbonate modified with Al(NO₃)₃ x 9 H₂O | Pseudo boehmite | | | |
| 5 | magnesium | Mg(NO₃)₂ x 6 H₂O, | MgO (support material precursor): Al₂O₃ (support material precursor) : MgO (Mg(NO₃)₂ x 6 H₂O) : Al₂O₃ (pseudo boehmite) : CeO₂ (Ce(NO₃)₃ x 6 H₂O) = 1:0.43:0.066:0.446:0.094 | 121 | MgO: 52.4 wt.% |
| | aluminium | | | | Al₂O₃: 43.0 wt.% |
| | hydroxycarbonate | Pseudo boehmite, | | | CeO₂: 4.6 wt.% |
| | | Ce(NO₃)₃ x 6 H₂O | | | |

| | | | | | |
|---|---|---|---|---|---|
| * the compound given in parentheses denotes the substance from which the corresponding fraction of the basic mixed metal oxide has been formed during calcination at the first calcination temperature. ^{#}as measured according to DIN ISO 9277. | | | | | |

### Manufacture of the fixed bed glycerol steam reforming catalyst

### Example 6

For the preparation of the appropriate catalyst tablets with a NiO loading of 15.5 wt.%, in a first step, 26.4 g Nickel nitrate hexahydrate were dissolved in 18.9 g of a low-chain alcohol at 48 °C.

The nickel nitrate hexahydrate solution was then added to the calcined MgO-Al₂O₃ tablets of Example 2 described above to impregnate the tablets by the incipient wetness technique.

After drying for 20 min under the hood, in a second step, 21.6 g Nickel nitrate hexahydrate was dissolved in 15.4 g of a low-chain alcohol at 48 °C. The nickel nitrate hexahydrate solution was then added to the impregnated MgO-Al₂O₃ tablets for incipient wetness impregnation.

After drying and calcination at a second calcination temperature of 950 °C for 5 h, catalyst tablets of 3.8 mm inner diameter and 3.5 mm height were obtained.

The as-obtained catalyst tablets exhibit a specific surface area of 56.5 m²/g as measured by N₂-BET method.

The catalyst tablets contained NiO in form of 20 nm crystallites as smallest building unit as measured by SEM-EDX.

The mechanical properties of the catalyst tablets were characterized by their side crush strength according to ASTM D4179. An average value of 82 N measured on 10 catalyst tablets was obtained.

### Example 7

For the preparation of the appropriate catalyst tablets with a NiO loading of 13.9 wt.%, in a first step, 35.5 g Nickel nitrate hexahydrate were dissolved in 57.1 g of a low-chain alcohol at 48 °C.

The nickel nitrate hexahydrate solution was then added to the calcined MgO-Al₂O₃ tablets of Example 3 described above to impregnate the tablets by the incipient wetness technique.

After drying for 20 min under the hood, in a second step, 29.1 g Nickel nitrate hexahydrate was dissolved in 46.7 g of a low-chain alcohol at 48 °C. The nickel nitrate hexahydrate solution was then added to the impregnated MgO-Al₂O₃ tablets for incipient wetness impregnation.

After drying, one part of the tablets were calcined at a second calcination temperature of 950 °C for 5 h. The as-obtained catalyst tablets of 3.7 mm inner diameter and 3.5 mm height exhibited a specific surface area of 52.2 m²/g as measured by N₂-BET method.

The other part of dried tablets were calcined at a second calcination temperature of 750 °C for 2 h. A specific surface area of 125 m²/g was measured on these tablets by the N₂-BET method.

The catalyst tablets contained NiO in form of 20 nm crystallites as smallest building unit as measured by SEM-EDX.

The mechanical properties of the catalyst tablets were characterized by their side crush strength according to ASTM D4179. An average value of 21 N measured on 10 catalyst tablets was obtained.

### Example 8

For the preparation of the appropriate catalyst tablets with a NiO loading of 12.5 wt.%, in a first step, 9.8 g Nickel nitrate hexahydrate were dissolved in 8.9 g of a low-chain alcohol at 48 °C.

The nickel nitrate hexahydrate solution was then added to the calcined MgO-Al₂O₃ tablets of Example 4 described above to impregnate the tablets by the incipient wetness technique.

After drying for 20 min under the hood, in a second step, 8 g Nickel nitrate hexahydrate were dissolved in 7.2 g of a low-chain alcohol at 48 °C. The nickel nitrate hexahydrate solution was then added to the impregnated MgO-Al₂O₃ tablets for incipient wetness impregnation.

After drying and calcination at a second calcination temperature of 950°C for 5 h catalyst tablets of 3.7 mm inner diameter and 3.5 mm height were obtained.

The as-obtained catalyst tablets exhibited a specific surface area of 58.5 m²/g measured by N₂-BET method.

The catalyst tablets contained NiO in form of 20 nm crystallites as smallest building unit as measured by SEM-EDX.

The mechanical properties of the catalyst tablets were characterized by their side crush strength according to ASTM D4179. An average value of 68 N measured on 10 catalyst tablets was obtained.

### Example 9

For the preparation of appropriate catalyst tablets with the same type and amount of support material tablets but with a higher NiO loading of 23.48 wt% (compared to Example 2), in a first step, 17.0 g Nickel nitrate hexahydrate were dissolved in 16.6 g of a low-chain alcohol at 48 °C.

The nickel nitrate hexahydrate solution was then added to 47.5 g of the calcined MgO-Al₂O₃ tablets prepared according to the procedure described in Example 2 to impregnate the tablets by the incipient wetness technique.

After drying for 20 min under the hood, in a second step, 15.2 g Nickel nitrate hexahydrate was dissolved in 10.7 g of a low-chain alcohol at 48 °C. The nickel nitrate hexahydrate solution was then added to the impregnated MgO-Al₂O₃ tablets for incipient wetness impregnation.

After complete drying and subsequent calcination at a temperature to allow complete decomposition of nickel nitrate hexahydrate to nickel oxide, in a third step, the tablets were impregnated by use of a 48 °C hot solution of 11.2 g Nickel nitrate hexahydrate in 15.3 g of a low-chain alcohol by the incipent wetness technique.

After drying and calcination at a second calcination temperature of 950°C for 5 h, the catalyst tablets exhibited a specific surface area of 63.7 m²/g as measured by the N₂-BET method according to DIN ISO 9277.

### Performance in glycerol reforming

### Performance test 1: Single run performance at 750 °C, steam reforming

For testing the performance of the catalyst according to Example 6 as prepared above, 0.1 to 0.2 mm grains of the catalyst obtained after crushing and sieving of the catalyst tablets were activated in a reduction step forming catalytically active species and were tested in a steam reforming reactor at a reforming temperature of 750 °C and a space velocity of 3 g glycerol/ g catalyst per hour, wherein the steam to carbon (S/C) ratio was adjusted to 2.1.

Under these conditions, a glycerol conversion yield of 96 % was obtained, with the only side product being methane at a concentration of 0.11 vol.%, based on the total volume of the product gas, which is only slightly above the equilibrium concentration of 0.04 vol.%. No other side products were detected.

With other words, the catalyst according to the invention exhibits a very high catalytic performance, as no side product other than methane was observed, wherein methane is an expected and unavoidable side product formed by hydrogenation of CO formed in the glycerol steam reforming reaction.

### Performance test 2: Multicycle operation at 750 °C, steam reforming and redox cycles at 800 °C

To examine the catalytic activity of the catalyst as used in Performance test 1 under chemical looping gas conditions, 20 redox cycles were performed after a glycerol steam reforming step, with each redox cycle consisting of an oxidation step and a reduction step in this test.

The multicycle test consisted of 2 h of reforming at 750 °C at a steam to carbon ratio (S/C) of 2, then 20 redox cycles at 800 °C consisting of 5 min under oxidation conditions, 5 min purge in N₂, 5 min in H₂/N₂ with 20 vol.% H₂, 5 min purge in N₂ followed by 2 hours under reforming conditions at 750 °C at a S/C ratio of 2.

Even after 20 redox cycles with a total duration of 10 hours, a glycerol conversion yield of 97 % was achieved with a product gas of the composition 68.3 vol.% H₂, 14.1 vol.% CO, 17.5 vol.% CO₂ and 0.1 vol.% methane, indicating the stability of the catalyst under chemical looping conditions.

### Performance test 3: Single run performance at 800 °C, steam and steam/CO₂ reforming

The catalytic performance of the catalyst as used in Performance test 1 was also examined in a steam reforming reactor at a reforming temperature of 800 °C at a space velocity of 3 g glycerol/ g catalyst per hour, for steam reforming and mixed steam/CO₂ reforming by adding CO₂ to the glycerol-water mixture in the reactor, the steam to carbon (S/C) ratio was adjusted to 2.1 and the resulting steam to CO₂ ratio was 3.4.

It was found that for steam reforming, a glycerol conversion yield of 98% and a product gas with the composition 68.16 vol.% H₂, 14.9 vol.% CO, 16,9 vol.% CO₂ and 0.04 vol.% methane, i.e. with no excess formation of methane over the equilibrium value (0.01 vol.%), was achieved.

In direct comparison, after addition of CO₂ in catalytic combined steam and dry reforming, a glycerol conversion yield of 94.5 % and a product gas with the composition 53.8 vol.% H₂, 19.1 vol.% CO, 27.05 vol.% CO₂ and 0.05 vol.% methane i.e. with no excess formation of methane over the equilibrium value (0.01 vol.%), was achieved.

### Performance test 4: Multicycle operation at 750 °C, steam reforming and redox cycles at 900 °C

For this performance test, a fixed bed glycerol steam reforming catalyst according to the invention in the form of cylindrically shaped tablets with dimensions of 4 x 4 mm were prepared with a mass ratio of MgO : Al₂O₃ : NiO of 46.9 : 37.7 : 15.4 in analogy to the procedure described above for Example 6.

The catalyst exhibited a specific surface area of 47.1 m²/g as measured after calcination for 5 hours at 950 °C by the N₂-BET method according to DIN ISO 9277

This catalyst was tested in the form of 0.71 to 1.25 mm grains in a fixed bed reactor in chemical looping reforming of glycerol at a feed rate of 0.044 NL/min, a steam to glycerol ratio of 12 : 1 and a steam to carbon (S/C) ratio equal to 4.0 in 0.956 NL/min He at an operating temperature of 750 °C after reduction in a H₂-He mixture containing 5 vol.% H₂ for 12 min.

Complete glycerol conversion was measured and a dry product gas containing 75.3 vol.% H₂, 18.9 vol.% CO₂, 5.1 vol.% CO and 0.7 vol.% CH₄ was obtained.

After the reforming step, the catalyst was oxidized within 2 min 50 sec at 900 °C in an O₂-He mixture containing 4.2 vol.% O2, followed by a subsequent new chemical looping cycle.

This experiment indicates the suitability of the fixed bed catalyst according to the invention in chemical looping reforming up to an operating temperature of 900 °C while still obtaining complete conversion of glycerol.

### Performance test 5: Multicycle operation at 750 °C, steam/CO₂ reforming

The catalyst as used in Performance Test 4 was also tested under chemical looping conditions in combined steam and dry reforming (steam/CO₂ reforming) at 750 °C at a glycerol feed rate of 0.044 NL/min, a steam to glycerol ratio of 12 : 1 and a steam to carbon (S/C) ratio equal to 4.0 in 0.728 NL/min He with addition of 0.0024 NL/min CO₂.

Also in this case, complete conversion of glycerol was measured and a product gas with a dry gas composition of 30.6 vol.% H₂, 55.4 vol.% CO₂, 13.6 vol.% CO and 0.4 vol.% CH₄ was obtained.

### Performance test 6: Multicycle operation at 900 °C, steam reforming

For this performance test, a fixed bed glycerol steam reforming catalyst according to the invention in the form of cylindrically shaped tablets with dimensions of 4 x 4 mm were prepared with a mass ratio of MgO : Al₂O₃ : NiO of 43.7 : 34.9 : 21.4 in analogy to the procedure described above for Example 9.

The catalyst exhibited a specific surface area of 50.6 m²/g after calcination for 5 h at 950 °C as measured by the N₂-BET method according to DIN ISO 9277.

The side crush strength of the tablets as measured according to ASTM D4179 was 68 N.

This catalyst was tested in the form of 0.71 to 1.25 mm grains in a fixed bed reactor in chemical looping reforming of glycerol at a feed rate of 0.044 NL/min, a steam to glycerol ratio of 12:1 and a steam to carbon (S/C) ratio equal to 4.0 in 0.956 NL/min He at an operating temperature of 900 °C after reduction in a H₂-He mixture containing 10 vol.% H₂ for not more than 30 min.

99.9 % glycerol conversion was measured and a dry product gas containing 63.8 vol.% H₂, 23.8 vol.% CO₂, 12.1 vol.% CO and 0.2 vol.% CH₄ was obtained.

After the reforming step, the catalyst was oxidized within 10 min at 900 °C in an O₂-He mixture containing 10.0 vol.% O2, followed by a subsequent new chemical looping cycle.

## Claims

1. A fixed bed glycerol steam reforming catalyst comprising a support material loaded with a catalytically active material,
wherein the support material is a particle mixture of a basic mixed metal oxide consisting of MgO-Al₂O₃ or MgO-Al₂O₃-CeO₂,
wherein the basic mixed metal oxide comprises from 40 to 60 wt.% of MgO, from 35 to 60 wt.% of Al₂O₃ and from 0 to 6 wt.% CeO₂, based on the total weight of the basic mixed metal oxide,
wherein the support material has a specific surface area of 120 m²/g or more after calcination for 2 hours in ambient air at a temperature of 750 °C,
wherein the catalytically active material is an oxide of nickel,
wherein the catalyst has a specific surface area of 45 m²/g or more after calcination for 5 hours in ambient air at a temperature of 950 °C, and
wherein the catalyst has a tablet-like form.

2. The catalyst according to claim 1 wherein the basic mixed metal oxide comprises from 50 to 60 wt.% of MgO, from 37 to 45 wt.% of Al₂O₃ and from 3 to 6 wt.% of CeO₂, based on the total weight of the basic mixed metal oxide.

3. The catalyst according to any of the preceding claims, wherein the catalytically active material is deposited in the form of particles on the support material, wherein the particles have a primary particle size in the range of from 10 to 50 nm.

4. The catalyst according to any of the preceding claims, wherein the support material has a specific surface area of 120 m²/g to 160 m²/g or more after calcination for 2 hours in ambient air at a temperature of 750 °C.

5. The catalyst according to any of the preceding claims, wherein the catalyst has a specific surface area of 70 m²/g or more after calcination for 2 hours in ambient air at a temperature of 750 °C, especially in the range of from 70 to 130 m²/g.

6. The catalyst according to any of the preceding claims, wherein the catalyst has a specific surface area of from 45 to 60 m²/g after calcination for 5 hours in ambient air at a temperature of 950 °C, especially of from 47 m²/g to 60 m²/g.

7. The catalyst according to any of the preceding claims, wherein the catalyst comprises a loading with the catalytically active material of from 5 to 50 %, related to the total mass of the basic mixed metal oxide, especially of from 10 to 40 %.

8. A use of the catalyst according to any of the preceding claims in a steam reforming process chosen from glycerol steam reforming and combined glycerol steam and dry reforming, wherein the steam reforming process has an operating temperature of from 700 to 900 °C.

9. The use according to claim 8, wherein the steam reforming process is a multicycling steam reforming and oxidation process.

10. The use according to claim 9, wherein a single cycle of the multicycling steam reforming and oxidation process comprises the following steps:
a) a reduction step,
b) a glycerol steam reforming step or a glycerol steam and dry reforming step at a temperature in the range of from 700 to 900 °C, and
c) an oxidation step at a temperature of up to 900 °C.

11. The use according to claim 9 or 10, wherein a single cycle of the multicycling steam reforming and oxidation process has a total duration of from 9 to 50 min.

12. A method for preparing a fixed bed glycerol steam reforming catalyst according to any of claims 1 to 7 comprising the following steps:
a) Impregnating a support material precursor with a basic mixed metal oxide modifier suspension to form a precursor mixture,
wherein the support material precursor consists of magnesium aluminium hydroxy carbonate and/or magnesium aluminium hydroxyl carbonate modified with Al(NO₃)₃ x 9 H₂O, and
wherein the basic mixed metal oxide modifier suspension comprises pseudo boehmite, Mg(NO₃)₂ x 6 H₂O, and optionally Ce(NO₃)₃ x 6 H₂O,
b) Forming a support material intermediate by drying and pressing the precursor mixture, wherein pressing of the precursor mixture is done by means of a tablet pressing machine,
c) Calcining the dried and pressed precursor mixture at a first calcination temperature in the range of from 750 to 900 °C to form a support material,
d) Impregnating the support material with a catalyst solution comprising a nickel-based catalyst precursor,
e) Calcining the impregnated support material at a second calcination temperature to form the fixed bed glycerol steam reforming catalyst, wherein at the second calcination temperature an oxide of nickel is formed as catalytically active material from the nickel-based catalyst precursor.

## Patentansprüche

1. Festbett-Glycerindampfreformierungskatalysator, der ein mit einem katalytisch aktiven Material beladenes Trägermaterial umfasst,
wobei das Trägermaterial ein Teilchengemisch aus einem basischen Mischmetalloxid ist, das aus MgO-Al₂O₃ oder MgO-Al₂O₃-CeO₂ besteht,
wobei das basische Mischmetalloxid 40 bis 60 Gew.-% MgO, 35 bis 60 Gew.-% Al₂O₃ und 0 bis 6 Gew.-% CeO₂, bezogen auf das Gesamtgewicht des basischen Mischmetalloxids, umfasst,
wobei das Trägermaterial nach 2-stündiger Calcinierung in Umgebungsluft bei einer Temperatur von 750 °C eine spezifische Oberfläche von 120 m²/g oder mehr aufweist,
wobei das katalytisch aktive Material ein Oxid von Nickel ist,
wobei der Katalysator nach 5-stündiger Calcinierung in Umgebungsluft bei einer Temperatur von 950 °C eine spezifische Oberfläche von 45 m²/g oder mehr aufweist und
wobei der Katalysator eine tablettenartige Form aufweist.

2. Katalysator nach Anspruch 1, wobei das basische Mischmetalloxid 50 bis 60 Gew.-% MgO, 37 bis 45 Gew.-% Al₂O₃ und 3 bis 6 Gew.-% CeO₂, bezogen auf das Gesamtgewicht des basischen Mischmetalloxids, umfasst.

3. Katalysator nach einem der vorhergehenden Ansprüche, wobei das katalytisch aktive Material in Form von Teilchen auf dem Trägermaterial abgeschieden ist, wobei die Teilchen eine Primärteilchengröße im Bereich von 10 bis 50 nm aufweisen.

4. Katalysator nach einem der vorhergehenden Ansprüche, wobei das Trägermaterial nach 2-stündiger Calcinierung in Umgebungsluft bei einer Temperatur von 750 °C eine spezifische Oberfläche von 120 m²/g bis 160 m²/g oder mehr aufweist.

5. Katalysator nach einem der vorhergehenden Ansprüche, wobei der Katalysator nach 2-stündiger Calcinierung in Umgebungsluft bei einer Temperatur von 750 °C eine spezifische Oberfläche von 70 m²/g oder mehr aufweist, insbesondere im Bereich von 70 bis 130 m²/g.

6. Katalysator nach einem der vorhergehenden Ansprüche, wobei der Katalysator nach 5-stündiger Calcinierung in Umgebungsluft bei einer Temperatur von 950 °C eine spezifische Oberfläche von 45 bis 60 m²/g aufweist, insbesondere von 47 m²/g bis 60 m²/g.

7. Katalysator nach einem der vorhergehenden Ansprüche, wobei der Katalysator eine Beladung mit dem katalytisch aktiven Material von 5 bis 50 %, bezogen auf die Gesamtmasse des basischen Mischmetalloxids, umfasst, insbesondere von 10 bis 40 %.

8. Verwendung des Katalysators nach einem der vorhergehenden Ansprüche in einem Dampfreformierungsprozess, der aus Glycerindampfreformierung und kombinierter Glycerindampf- und -trockenreformierung ausgewählt ist, wobei der Dampfreformierungsprozess eine Betriebstemperatur von 700 bis 900 °C aufweist.

9. Verwendung nach Anspruch 8, wobei der Dampfreformierungsprozess ein multizyklischer Dampfreformierungs- und Oxidationsprozess ist.

10. Verwendung nach Anspruch 9, wobei ein einzelner Zyklus des multizyklischen Dampfreformierungs- und Oxidationsprozesses die folgenden Schritte umfasst:
a) einen Reduktionsschritt,
b) einen Glycerindampfreformierungsschritt oder einen Glycerindampf- und -trockenreformierungsschritt bei einer Temperatur im Bereich von 700 bis 900 °C und
c) einen Oxidationsschritt bei einer Temperatur von bis zu 900 °C.

11. Verwendung nach Anspruch 9 oder 10, wobei ein einzelner Zyklus des multizyklischen Dampfreformierungs- und Oxidationsprozesses eine Gesamtdauer von 9 bis 50 min aufweist.

12. Verfahren zur Herstellung eines Festbett-Glycerindampfreformierungskatalysators nach einem der Ansprüche 1 bis 7, das die folgenden Schritte umfasst:
a) Tränken eines Trägermaterialvorläufers mit einer Modifikatorsuspension eines basischen Mischmetalloxids zur Bildung einer Vorläufermischung,
wobei der Trägermaterialvorläufer aus mit Al(NO₃)₃ x 9 H₂O modifiziertem Magnesium-Aluminium-Hydroxycarbonat und/oder Magnesium-Aluminium-Hydroxylcarbonat besteht, und
wobei die Modifikatorsuspension des basischen Mischmetalloxids Pseudo-Böhmit, Mg(NO₃)₂ x 6 H₂O und optional Ce(NO₃)₃ x 6 H₂O umfasst,
b) Bilden eines Trägermaterial-Zwischenprodukts durch Trocknen und Pressen der Vorläufermischung, wobei das Pressen der Vorläufermischung mittels einer Tablettenpressmaschine erfolgt,
c) Calcinieren der getrockneten und gepressten Vorläufermischung bei einer ersten Calcinierungstemperatur im Bereich von 750 bis 900 °C zur Bildung eines Trägermaterials,
d) Tränken des Trägermaterials mit einer Katalysatorlösung, die einen Katalysatorvorläufer auf Nickelbasis umfasst,
e) Calcinieren des getränkten Trägermaterials bei einer zweiten Calcinierungstemperatur zur Bildung des Festbett-Glycerindampfreformierungskatalysators, wobei bei der zweiten Calcinierungstemperatur aus dem Katalysatorvorläufer auf Nickelbasis ein Oxid von Nickel als katalytisch aktives Material gebildet wird.

## Revendications

1. Catalyseur de reformage à la vapeur de glycérol en lit fixe, comprenant une matière de support chargée d'une matière catalytiquement active,
la matière de support étant un mélange de particules d'un oxyde métallique mixte basique constitué de MgO-Al₂O₃ ou de MgO-Al₂O₃-CeO₂,
l'oxyde métallique mixte basique comprenant de 40 à 60 % en poids de MgO, de 35 à 60 % en poids d'Al₂O₃ et de 0 à 6 % en poids de CeO₂ par rapport au poids total de l'oxyde métallique mixte basique,
la matière de support présentant une surface spécifique de 120 m²/g ou plus après calcination pendant 2 heures à l'air ambiant à une température de 750 °C,
la matière catalytiquement active étant un oxyde de nickel,
le catalyseur présentant une surface spécifique de 45 m²/g ou plus après calcination pendant 5 heures à l'air ambiant à une température de 950 °C, et
le catalyseur se présentant sous forme de comprimé.

2. Catalyseur selon la revendication 1, l'oxyde métallique mixte basique comprenant de 50 à 60 % en poids de MgO, de 37 à 45 % en poids d'Al₂O₃ et de 3 à 6 % en poids de CeO₂ par rapport au poids total de l'oxyde métallique mixte basique.

3. Catalyseur selon l'une des revendications précédentes, la matière catalytiquement active étant déposée sous forme de particules sur la matière de support, les particules présentant une taille de particules primaires dans la plage de 10 à 50 nm.

4. Catalyseur selon l'une des revendications précédentes, la matière de support présentant une surface spécifique de 120 m²/g à 160 m²/g ou plus après calcination pendant 2 heures à l'air ambiant à une température de 750 °C.

5. Catalyseur selon l'une des revendications précédentes, le catalyseur présentant une surface spécifique de 70 m²/g ou plus après calcination pendant 2 heures à l'air ambiant à une température de 750 °C, en particulier dans la plage de 70 à 130 m²/g.

6. Catalyseur selon l'une des revendications précédentes, le catalyseur présentant une surface spécifique de 45 à 60 m²/g après calcination pendant 5 heures à l'air ambiant à une température de 950 °C, en particulier de 47 m²/g à 60 m²/g.

7. Catalyseur selon l'une des revendications précédentes, le catalyseur comprenant une charge de matière catalytiquement active de 5 à 50 %, par rapport à la masse totale de l'oxyde métallique mixte basique, en particulier de 10 à 40 %.

8. Utilisation du catalyseur selon l'une des revendications précédentes dans un procédé de reformage à la vapeur choisi parmi le reformage à la vapeur de glycérol et le reformage combiné à la vapeur et à sec de glycérol, le procédé de reformage à la vapeur présentant une température de fonctionnement de 700 à 900 °C.

9. Utilisation selon la revendication 8, le procédé de reformage à la vapeur étant un procédé de reformage à la vapeur et d'oxydation à cycles multiples.

10. Utilisation selon la revendication 9, un cycle unique du procédé de reformage à la vapeur et d'oxydation à cycles multiples comprenant les étapes suivantes :
a) une étape de réduction,
b) une étape de reformage à la vapeur de glycérol ou une étape de reformage à la vapeur et à sec de glycérol à une température dans la plage de 700 à 900 °C, et
c) une étape d'oxydation à une température allant jusqu'à 900 °C.

11. Utilisation selon la revendication 9 ou 10, un cycle unique du procédé de reformage à la vapeur et d'oxydation à cycles multiples présentant une durée totale de 9 à 50 minutes.

12. Procédé de préparation d'un catalyseur de reformage à la vapeur de glycérol en lit fixe selon l'une des revendications 1 à 7, comprenant les étapes suivantes :
a) l'imprégnation d'un précurseur de matière de support avec une suspension de modificateur d'oxyde métallique mixte basique pour former un mélange précurseur,
le précurseur de matière de support étant constitué d'hydroxycarbonate de magnésium et d'aluminium et/ou d'hydroxylcarbonate de magnésium et d'aluminium modifié par du Mg(NO₃)₃ x 9H₂O, et
la suspension de modificateur d'oxyde métallique mixte comprenant de la pseudo-boehmite, du Mg(NO₃)₂ x 6H₂O, et facultativement du Ce(NO₃)₃ x 6H₂O,
b) la formation d'une matière de support intermédiaire par séchage et compression du mélange précurseur, la compression du mélange précurseur étant effectuée à l'aide d'une machine de presse à comprimés,
c) la calcination du mélange précurseur séché et comprimé à une première température de calcination dans la plage de 750 et 900 °C pour former une matière de support,
d) l'imprégnation de la matière de support avec une solution catalytique comprenant un précurseur de catalyseur à base de nickel,
e) la calcination de la matière de support imprégnée à une deuxième température de calcination pour former le catalyseur de reformage à la vapeur de glycérol en lit fixe, un oxyde de nickel étant formé en tant que matière catalytiquement active à partir du précurseur de catalyseur à base de nickel à la deuxième température de calcination.
